# EUROPEAN PATENT SPECIFICATION

(11) **EP 0 595 792 B1**
(45) Date of publication and mention of the grant of the patent: **27.08.1997**
(21) Application number: 94200046.4
(22) Date of filing: 09.12.1988
(51) Int. Cl.: G09G 3/30, G09G 3/36, H04N 3/12

(54) **Method and apparatus for driving capacitive display device**
Verfahren und Einrichtung zum Steuern eines kapazitiven Anzeigegeräts
Méthode et dispositif pour la commande d'un appareil d'affichage capacitif

(30) Priority: 07.06.1988 JP 139638/88; 02.07.1988 JP 165561/88; 18.07.1988 JP 179997/88; 18.07.1988 JP 179998/88
(43) Date of publication of application: 04.05.1994
(62) Divisional of application: 88311705.3
(73) Proprietor: SHARP KABUSHIKI KAISHA, Osaka 545 (JP)
(72) Inventor: Inada, Shuji, Nara-shi, Nara-ken (JP); Ohba, Toshihiro, Nara-shi, Nara-ken (JP); Ogawa,Ikuo, Vancouver Washington 968 (US); Kishishita, Hiroshi, Nara-shi, Nara-ken (JP); Uede, Hisashi, Wakayama-shi, Wakayama-ken (JP)
(74) Representative: Brown, Kenneth Richard

(56) References cited:
- FR-A- 2 547 091
- US-A- 4 554 539
- '1984 SID INTERNATIONAL SYMPOSIUM; DIGEST OF TECHNICAL PAPERS' June 1984 , PALISADES INSTITUTE FOR RESEARCH SERVICES , NY, US T. Gielow et al. : "Multiplex drive of a Thin-Film EL Panel", pages 242 - 244 *

## Description

This invention relates to a method and apparatus for driving a capacitive display device such as an electroluminescent (EL) display device. In particular, the invention relates to driving for gradation display of individual pixels.

Capacitive displays are well known and can be fabricated in a number of ways. For instance, a double insulation type (or triple insulation structure) thin film EL element is composed as follows.

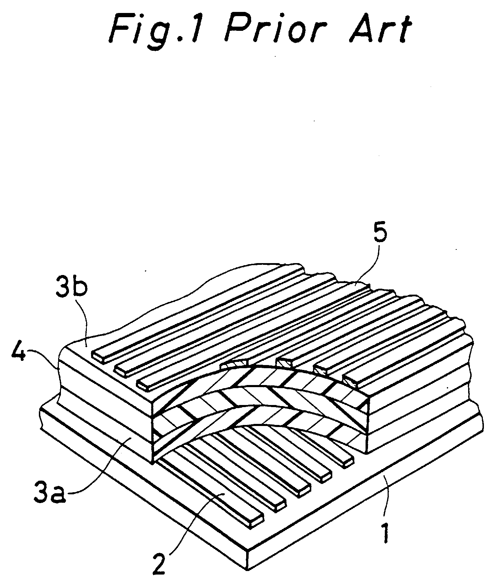

As shown in FIG. 1, parallel strips of transparent electrodes 2 made of In₂O₃ are disposed on a glass substrate 1. A layer 3a of an inductive substance such as Y₂O₃, Si₃N₄, Al₂O₃ or the like, an EL layer 4 made of ZnS doped with an activator such as Mn, and another layer 3b of a similar inductive substance of such as Y₂O₃, Si₃N₄, TiO₂, Al₂O₃ or the like are sequentially laminated on the glass substrate 1. The film thickness is from 500 to 10000 Å and is deposited by thin film techniques such as evaporation or sputtering to compose a three-layer structure. Parallel strips of back electrodes 5 made of Al are disposed on the laminate opposed to and in a direction orthogonal to the transparent electrodes 2.

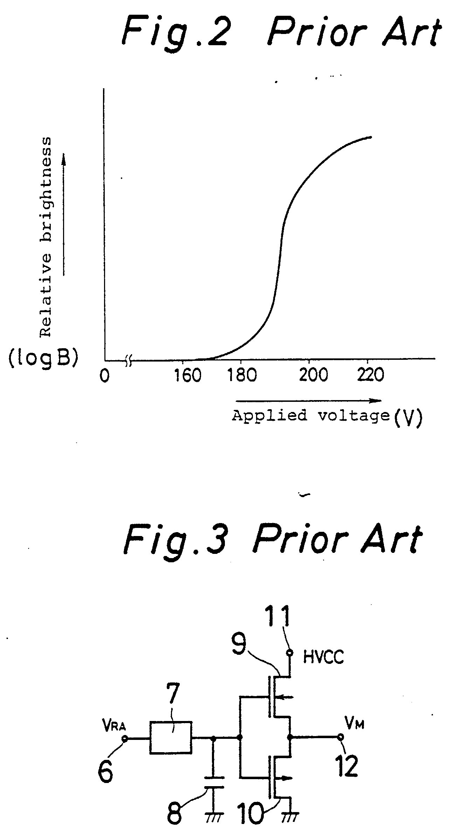

Such a thin film EL element has the EL substance 4 sandwiched between the inductive substances 3a, 3b, and it may be regarded as a capacitive element from the viewpoint of equivalent circuit. This thin film EL element is driven by applying a relatively high voltage of about 200 V across the electrodes and its voltage-brightness curve is shown in FIG. 2. This thin film EL element emits light at high brightness by AC electric field, and has a long life.

The basic display drive of the thin film EL display apparatus using such a thin film EL element as a display panel is achieved by applying a writing voltage sequentially to the scanning side electrodes and a modulation voltage corresponding to the display data to determine emission and non-emission to the data side electrodes. Either one of transparent electrodes 2 and back electrodes 5 of the thin film EL element can be used as scanning side electrodes or data side electrodes. The superposing effect or cancelling effect of the writing voltage and modulating voltage occurs at the intersecting pixel area of the scanning side electrode and data side electrode of the EL layer. A voltage greater than the emission start voltage or less than the emission start voltage is applied across the electrodes, and each pixel is set in an emission state or non-emission state, so that a desired display is obtained.

A conventional method for driving such a thin film EL display to obtain a gradated display, is to vary the brightness of each pixel by applying a modulation voltage to each pixel corresponding to the level of brightness desired. The modulation voltage is applied to the data electrodes and corresponds to gradation display data supplied to the display drivers.

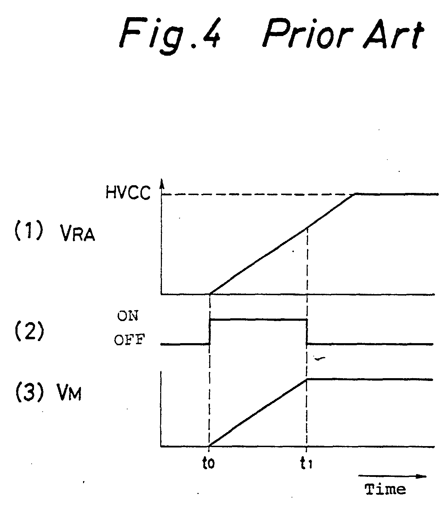

FIG. 3 is a circuit diagram showing a part of the output of the data side driver circuit of a thin film EL display apparatus which is driven utilising the voltage modulation method outlined above, in order to obtain a gradated display. FIG. 4 is a timing chart showing the operation of the circuit. In FIG. 3, an input terminal 6 receives a ramp waveform voltage V_{RA} as shown in FIG. 4(1), and is connected to one of the terminals of a capacitor 8 through a switch 7. The other terminal of the capacitor 8 is grounded. The connecting point of the switch 7 and capacitor 8 is connected to each gate of an N-channel MOS transistor 9 and a P-channel MOS transistor 10.

The drain of the N-channel MOS transistor 9 is connected to a power supply 11 for supplying a voltage HVCC corresponding to the maximum modulation voltage applied to the data side electrode. The source of the transistor 9 is connected to the source of the P-channel MOS transistor 10, and the drain of transistor 10 is grounded. The connecting point of the source of N-channel MOS transistor 9 and the source of the P-channel MOS transistor 10 is connected to an output terminal 12.

In such a data side drive circuit, when a ramp waveform voltage V_{RA} shown in FIG. 4(1) begins to be applied to the input terminal 6, the switch 7 is turned on. The ON duration of the switch 7 is set according to the gradation display data mentioned above. When the switch 7 is turned on, an electric current flows into the capacitor 8, and the capacitor 8 is charged to a voltage depending upon how long the switch 7 is ON (from time t₀ to t₁ in FIG. 4), i.e., the gradation display data. This charging voltage is applied to the gates of the respective transistors 9, 10, and the N-channel MOS transistor 9 is turned on, and the P-channel MOS transistor 10 is turned off. The output terminal 12 delivers an output voltage as shown in FIG. 4(3), corresponding to the charging voltage of the capacitor 8, which is the modulation voltage Vm corresponding to the gradation display data. This modulation voltage Vm is applied to the data side electrode, and by varying this modulation voltage Vm, the brightness of the corresponding pixel can be varied and gradation display is effected.

In this drive method, however, the N-channel MOS transistor 9 is not always turned on in a saturated state, and the ON resistance varies with the voltage applied to the gate, i.e. the gradation display data. This ON resistance can be a high value. The thin film EL element is a large-sized capacitive display element, and the quantity of current flowing per channel (a circuit for one pixel) in the drive circuit is large, and thus the heat loss at the N-channel MOS transistor 9 can become very significant if the ON resistance is high. It is hence difficult to integrate such transistors when composing a drive circuit in an integrated circuit. Additionally, in the manufacturing process of such an integrated circuit, since the P-channel MOS transistor and N-channel MOS transistor of high voltage resistance must be assembled, the manufacturing cost of integrated circuit is very high, which has made it hard to realize practically.

Also, in such thin film EL display apparatus, a method of driving a gradated display known as the pulse width modulation method has been used. In this method the brightness of pixels is varied by varying the pulse width of the modulation voltage in accordance with gradation display data.

In this drive method, however, the gradation brightness is not stable as explained below, and many stages of gradation cannot be set.

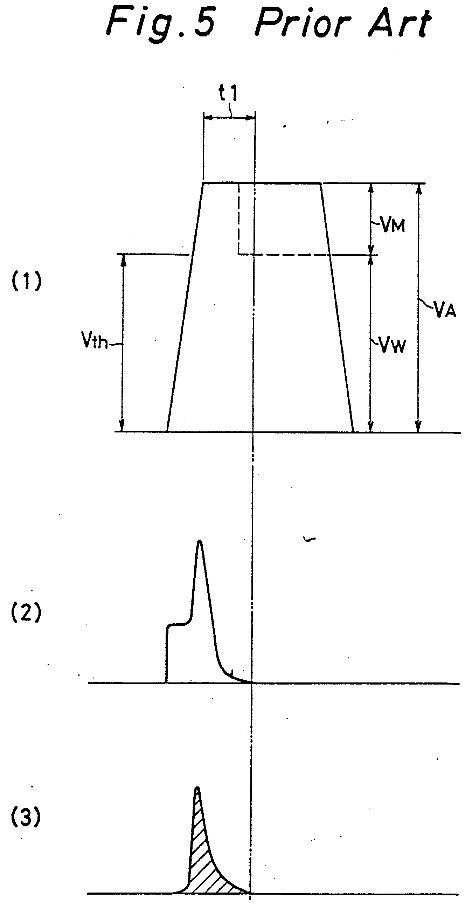

FIG. 5(1), (2), (3) show applied voltage waveforms to pixels in a supposed pulse width modulation method, the waveform of the power supply current at this time, and the waveform of the current flowing in the emission layer of the pixels.

As shown in FIG. 5(1), the effective voltage V_{A} applied to a pixel is the superposed value of the modulation voltage V_{M} applied to the data side electrode, and the writing voltage V_{W} applied to the scanning side electrode having a reverse polarity to the modulation voltage V_{M}, and in a magnitude corresponding to the emission threshold voltage Vth. When the effective voltage V_{A} of such a rectangular wave is applied to a pixel, the waveform of the power supply current is as shown in FIG. 5(2).

That is, while the effective voltage V_{A} is below the emission threshold voltage Vth, a nearly constant current which does not contribute to the emission current flows in the capacitive portion of the pixel. When the effective voltage V_{A} exceeds the emission threshold voltage Vth, the current flowing in the emission layer is as shown in FIG. 5(3). The current portion flowing in the emission layer of the pixel, that is the current portion contributing to emission, is added to the current portion flowing in the capacitive component of the pixel, as shown in FIG. 5(2). The emission brightness of pixels is proportional to the current quantity of the current flowing in the emission layer.

Here, when the pulse width of the modulation voltage V_{M} is limited as indicated by broken line in FIG. 5(1), the current flowing in the emission layer is shut off at the fall point of the modulation voltage V_{M}. That is, by limiting the pulse width of the modulation voltage V_{M}, the quantity of current flowing in the emission layer of pixel is controlled, so that a brightness corresponding to the pulse width of the modulation voltage V_{M} is obtained.

However, when the effective voltage V_{A} applied to pixels is a rectangular wave, that is, when the modulation voltage V_{M} is a rectangular wave, the current flowing in the emission layer is a peak current, and its duration is short (as indicated by tl in FIG. 5(1)). Thus, it is difficult to set the pulse width of the modulation voltage V_{M} in multiple stages, which means it is impossible to control the brightness of the pixels in multiple stages. Additionally, at each brightness level the current flowing in each emission layer is large, hence only a slight error in the pulse width of the modulation voltage V_{M} may result in a large change in the brightness, this makes it difficult to stabilize the gradation of brightness.

In this drive method, for example, when transparent electrodes of high line resistance are used as data side electrode, the modulation voltage applied to the data side electrodes is affected by the line resistance, and a brightness difference occurs among pixels as described below.

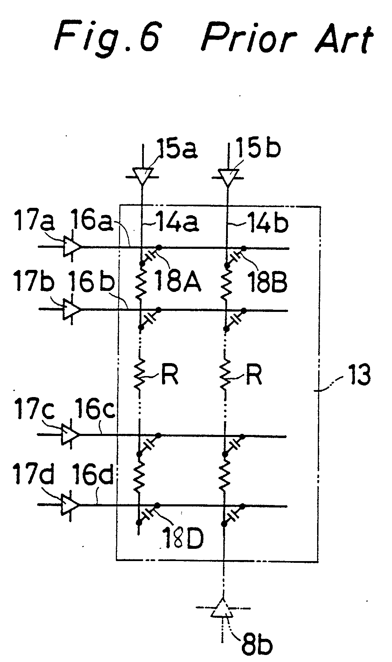

FIG. 6 is a connection diagram of a display panel 13 of thin film EL display apparatus and part of its drive circuit, presented to explain the cause of such brightness difference. In FIG. 6, the data side electrodes 14a, 14b are connected to output ports 15a, 15b of a data side drive circuit for applying modulation voltage V_{M} to these data side electrodes 14a, 14b. A plurality of scanning side electrodes 16a, 16b, 16c, 16d are disposed mutually parallel in a direction orthogonal to the data side electrodes 14a, 14b, and these scanning side electrodes 16a to 16d are respectively connected to output ports 17a, 17b, 17c, 17d of a scanning side drive circuit for applying writing voltage -V_{W} to them. In FIG. 6, intermediate line resistances of the data side electrodes 14a, 14b are indicated by resistance R.

In such a thin film EL display if two pixels 18A and 18D are to be displayed at the same brightness then a writing voltage -V_{W} is sequentially applied to scanning side electrodes 16a and 16d, and the same modulation voltage V_{M} is sequentially applied to the data side electrode 14a. Thus, the brightness of each pixel 18A and 18D should be identical.

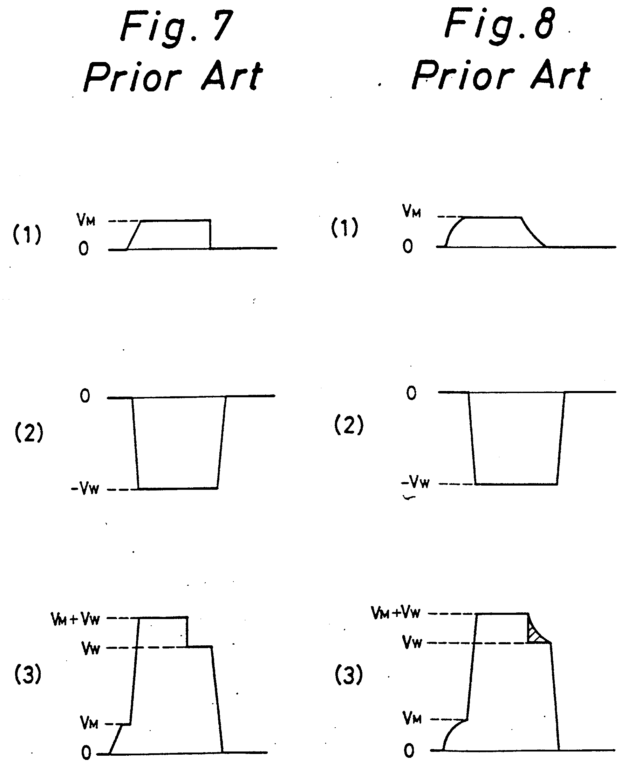

Pixel or picture element 18A is located at a position near output port 15a. Since the line length of the data side electrode 14a from output port 15a to pixel 18A is short, the effect of the line resistance is almost negligible. Therefore a voltage having nearly the same waveform as the modulation voltage V_{M} delivered from the output port 15A is applied to the pixel 18A, as shown in FIG. 7(1). At this time, when a writing voltage -V_{W} having the waveform shown in FIG. 7(2) is applied from the output port 17a of the scanning side drive circuit to the scanning side electrode 16a, an effective voltage having the waveform as shown in FIG. 7(3) is applied to pixel 18A.

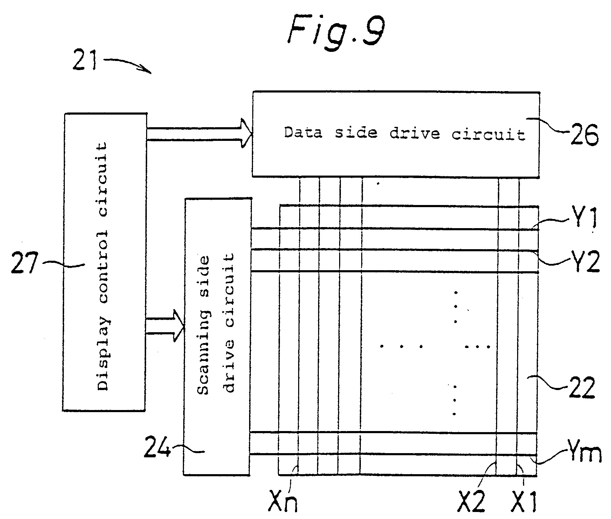

In contrast, pixel 18D is remote from output port 15a, and the length of the data side electrode 14a from the output port 15a to the pixel 18D is long and thus the line resistance R in this length is large, and the modulation voltage V_{M} is greatly affected by the line resistance R. Therefore, a voltage waveform as shown in FIG. 8(1) is applied to the pixel 18D. Such a waveform is as if the modulation voltage is being driven into an integrating circuit. At this time, when a writing voltage -V_{W} having the waveform as shown in FIG. 8(2) is applied from the output port 17d of the scanning side drive circuit to the scanning side electrode 16d, an effective voltage having the form as shown in FIG. 8(3) is applied to the pixel 18D.

With respect to the effective voltages applied to the pixels 18A, 18D, the voltage substantially contributing to emission is the portion over the emission threshold voltage Vth. When the waveform in FIG. 7(3) and the waveform in FIG. 8(3) are compared with respect to the portion over the emission threshold voltage Vth, it is clear that the waveform in FIG. 8(3) is wider in area by the shaded area portion. This difference results directly in a difference in the brightness between pixels 18A and 18D. Even though it was intended that they emit the same brightness, the pixel 18D is actually brighter than the pixel 18A.

That is, if a modulation voltage V_{M} of identical waveform is applied to two separate pixels, the pixel closer to the output port is darker than the one furthest away, and the brightness fluctuates. If this difference in the brightness occurs between pixels vertically adjacent which should be identical in gradation, the display quality deteriorates.

Further examples of conventional methods of driving capacitative display devices are given in GB-A-2,165,078, US-A-4,554 539 , EP-A-0,106,550 and EP-A-0,187,347.

The invention which is the subject matter of European Patent 0,345,399, from which this application was divided is directed to alleviate the problem described above with reference to Figures 6 to 8.

It is an object of the present invention to alleviate the foregoing problems described above with reference to Figure 5.

The object is achieved by a method according to claim 1 and an apparatus according to claim 2.

An advantage of the method and apparatus is that a ramp voltage can be applied to the data electrodes as a modulation voltage, and therefore the peak value of the current flowing in the emission layer of pixels as the current contributing to the emission can be kept low, and the current passing time is extended. Thus, the pulse width of the modulation voltage may be set in multiple stages, and the current flowing in the emission layer becomes smaller at each stage of brightness, and the gradation of brightness is stabilized.

According to a preferred embodiment of the invention the data electrode driving means is arranged to derive said data pulses from a D.C. power supply, and includes: an impedance converting means disposed electrically in series between said D.C. power supply and one of said data electrodes and having an impedance which varies in accordance with a control signal applied thereto; and a control signal generating means for generating a said control signal which increases continuously in voltage level and applying said control signal to said impedance converting means; and switching means being provided for causing a current to be applied from said impedance converting means to said data electrode under the control of said control signal for a time period according to the gradation display data.

An advantage of this latter arrangement is that the drive device capable of displaying in gradations can be made at low cost by simplifying the manufacturing process and keeping heat loss of transistors in the device low.

In further preferred embodiment the impedance converting means and/or the switching means is composed of N-channel MOS transistors.

In this embodiment the impedance of the impedance converting means decreases for an increase in the voltage amplitude of the control signal.

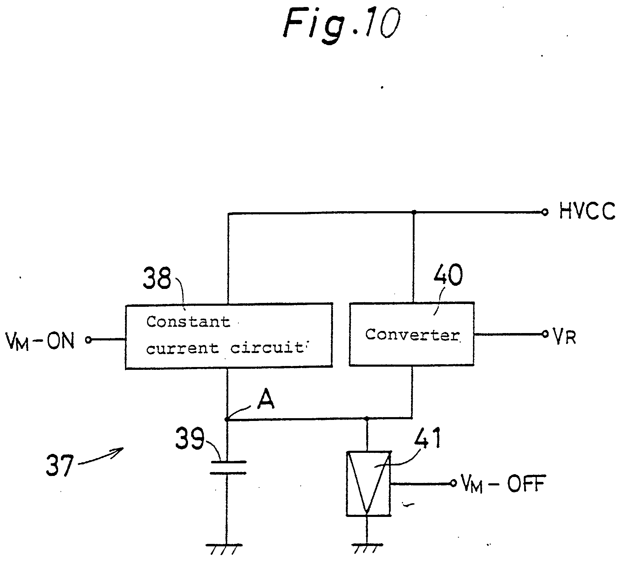

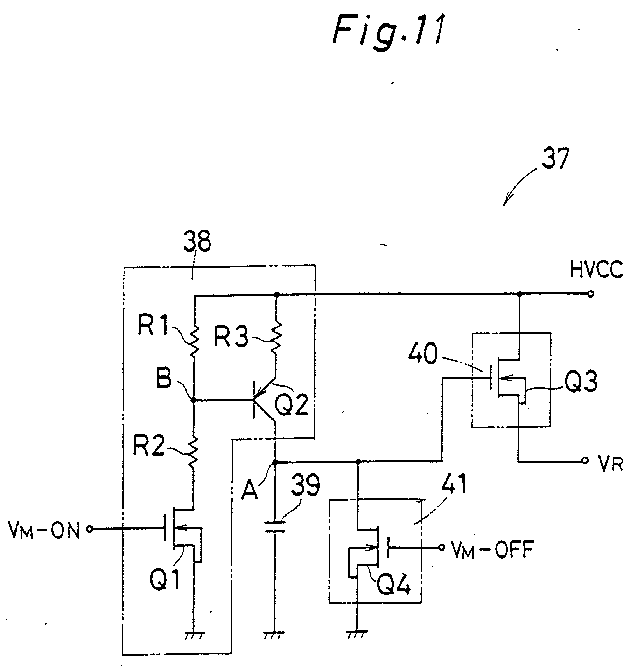

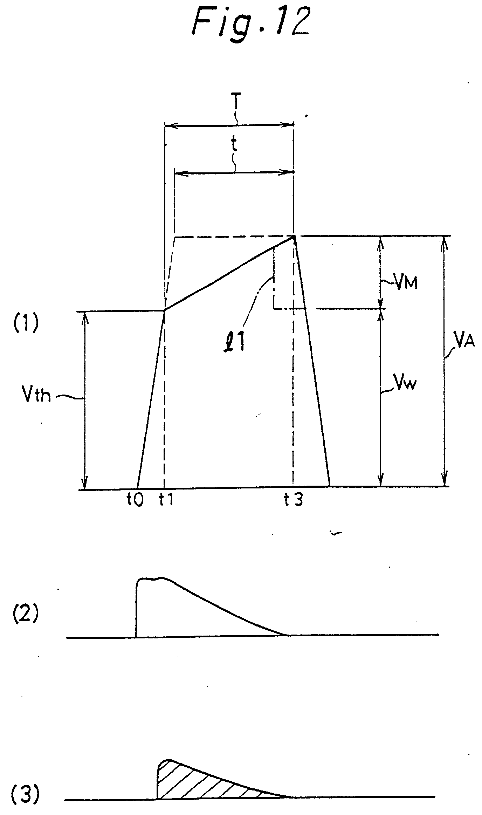

Some preferred embodiments of the invention will now be described by way of example with reference to Figures 9 to 12 of the accompanying drawings. In the drawings:-
FIG. 1 is a partially cut-away perspective view of a thin film EL element, FIG. 2 is a graph showing the voltage-brightness characteristic of thin film EL element, FIG. 3 is a circuit diagram showing one output part of data side drive circuit of thin film EL display apparatus to which a conventional drive method is applied, FIG. 4 is a timing chart showing its operation, FIG. 5(1), (2), (3) are waveform diagrams showing the voltage applied to pixels, power source current, and current flowing in emission layer of pixels in the conventional drive method, respectively, FIG. 6 is a circuit diagram showing an outline structure of essential parts of a thin film EL display apparatus to which a conventional drive method is applied, FIG. 7 is a waveform diagram showing the voltage applied to pixels positioned on scanning side electrode near output port of the same thin film EL display apparatus, FIG. 8 is a waveform diagram showing a voltage applied to pixels on the scanning electrode remote from the output port of the same thin film EL display apparatus, FIG. 9 is a block diagram showing an outline structure of thin film EL display apparatus to which a drive method as one of the embodiments of this invention is applied, FIG. 10 is a block diagram showing an outline structure of its ramp voltage generating circuit in accordance with the present invention, FIG. 11 is a circuit diagram showing a practical composition of this ramp voltage generating circuit, and FIG. 12 (1), (2), (3) are waveform diagrams showing the voltage applied to the pixels, power source current, and current flowing in the emission layer of the pixels, respectively.

### DETAILED DESCRIPTION OF THE PREFERRED EMBODIMENTS

FIG. 9 is a block diagram showing an outline structure of a thin film EL display device 21 as a capacitive display device to which a drive method as one of the embodiments of the invention is applied. In the drawing, a display panel 22 if made of thin film EL element, and its practical composition is same as explained in the prior art, and the same explanation is omitted here. Scanning side electrodes Y1, Y2, ..., Yn (collectively indicated by reference code Y) of the display panel 22 are connected to a scanning side drive circuit 24, and data side electrodes X1, X2, ..., Xn (collectively indicated by reference code X) of the display panel 22 are connected to a data side drive circuit 26, and a display control circuit 27 for controlling these circuits is connected to the scanning side drive circuit 24 and data side drive circuit 26.

FIG. 10 is a block diagram showing an outline structure of a ramp voltage generating circuit 37 for supplying a ramp voltage at modulation voltage V_{M} to the output stage of the data side drive circuit 26. In FIG. 10, a constant current circuit 38 is a circuit for passing a specific current by receiving a modualtion start signal V_{M}-ON from other functional part of the data side drive circuit 26, and it is connected to the power supply HVCC and also to one of the terminals of the capacitor 39, while the other terminal of the capacitor 39 is grounded.

A converter 40 is a circuit for receiving a charging voltage of a capacitor 39, and delivering a voltage V_{R} varying according to this charging voltage, and it is connected to the power supply HVCC and also to the connecting point A of the constant current circuit 38 and capacitor 39. Between the connecting point A and the ground, a switch 41 to be turned on by receiving a modulation end signal V_{M}-OFF given from other functional part of the data side drive circuit 26 is connected. The voltage of the power supply HVCC is set at the peak value of the modulation voltage V_{M}.

FIG. 11 is a circuit diagram showing an example of practical composition of a ramp voltage generating circuit 37 shown in FIG. 10. In FIG. 11, the constant current circuit 38 is composed of resistances R1, R2, R3, N-channel MOS transistor Q1, and PNP transistor Q2.

That is, resistances R1, R2 are connected in series, and one end of the resistance R1 is connected to the power supply HVCC, and the other end of the resistance R2 is connected to the drain of the N-channel MOS transistor Q1, and the source of this transistor Q1 is grounded, and a voltage of H level is applied to the gate of this transistor Q1 as modulation start signal V_{M}-ON. At the connecting point B of the resistances R1, R2, the base of the PNP transistor Q2 is connected, and the emitter of the transistor Q2 is connected to the power supply HVCC through resistance R3, and the collector of the transistor Q2 is connected to one of the terminals of the capacitor 13.

The converter 40 is composed of N-channel MOS transistor Q3, and the gate of the transistor Q3 is connected to the connecting point A of the capacitor 39 and transistor Q2, and the drain of the transistor Q3 is connected to the power supply HVCC, and the source of the transistor Q3 is connected to the output stage of the data side drive circuit 26 shown above (FIG. 9).

The transistor Q3 has a sufficient current supply capacity, and its source voltage does not vary depending on the output stage of the data side drive circuit 26. The switch 41 is composed also of N-channel MOS transistor Q4, and its drain is connected to the connecting point A, and its source is grounded, and a voltage of H level is applied to its gate as modulation termination signal V_{M}-OFF.

FIG. 12 (1), (2), (3) show the applied voltage waveform to the pixel in the gradation display driving in the thin film EL display apparatus 21 described above, the waveform of the supply current at this time, and the waveform of the current flowing in the emission layer of the pixel, respectively. Referring to these waveform diagrams, the operation is described below.

From time t0, application of writing voltage Vw from the scanning side drive circuit 24 shown in FIG. 9 to the scanning side electrodes Y is started, and when the writing voltage Vw reaches the emission threshold voltage Vth (time t1), H level voltage is applied to the gate of the transistor Q1 of the ramp voltage generating circuit shown in FIG. 14 as modulation start signal V_{M}-ON. As a result, the transistor Q1 is turned on, and the base potential of the transistor Q2 is lowered, and the transistor Q2 is turned on. Sequentially, a constant current begins to flow from the power supply HVCC into the capacitor 39 through resistance R3 and transistor Q2.

The charging voltage of the capacitor 39 rises at a specific gradient as the time passes. Therefore, in the transistor Q3 which receives this charging voltage as gate signal, its output or the source voltage V_{R} increases in proportion to the charging voltage. That is, the output of the transistor Q3 becomes a ramp voltage V_{R} elevating at a specific gradient with the passing of the time. This ramp voltage V_{R} is supplied to the output stage of the data side drive circuit 26, and is applied to the data side electrodes X as modulation voltage V_{M}.

After a specific time T (time t3), H level voltage is applied to the gate of the transistor Q4 of the ramp voltage generating circuit 37 shown in FIG. 11 as modulation termination signal V_{M}-OFF, and the electric charge in the capacitor 39 is discharged, and the charging voltage in the capacitor 39 is suddenly lowered, and the ramp voltage V_{R} drops at the same time. In this way, the modulation voltage V_{M} in the ramp waveform with pulse width T is applied from the data side drive circuit 26 into the data side electrodes X.

At this time, the effective voltage V_{A} applied to the corresponding pixel becomes a waveform as indicated by solid line in FIG. 12 (1). Therefore, the waveform of the power supply current at this time becomes as shown in FIG. 12 (2), that is, the passing time after the effective voltage V_{A} has exceeded the emission threshold voltage Vth becomes longer. Meanwhile, the effective voltage V_{A} is not rectangular wave, but is a superposed wave of the rectangular writing voltage Vw and modulation voltage V_{M} of ramp waveform, and therefore, the power supply current is not a peak current but attenuates smoothly.

This tendency directly continues in the current flowing in the emission layer of the pixel, and the waveform of this current is kept low in the peak value as shown in FIG. 12 (3), and attenuates smoothly to becomes a waveform having a long passing time. Besides, by setting the pulse width of the modulation voltage V_{M} making up the ramp waveform in several short steps as indicated by single dot chain line 11 in FIG. 12 (1), the current passing time flowing in the emission layer of the pixel shown in FIG. 12 (2) can be also shortened, and gradation display is realized.

In this case, since the current passing time flowing in the emission layer of the pixel is longer than in the prior art, the variably setting range of the pulse width of modulation voltage V_{M}, that is, the effective movable range indicated by symbol t in FIG. 15 (1) is widened, and the gradation display of multiple stages can be easily effected.

Moreover, the peak value of the current flowing in the emission layer of the pixels can be kept low, and the current at the brightness of each gradation stage is small, and the brightness does not change significantly due to error in the pulse width of the modulation voltage V_{M}, so that the gradation of each stage can be stably displayed.

In this embodiment, it is explained to drive the thin film EL display apparatus 21, but this invention may be similarly applied to driving of other capacitive display apparatus such as plasma display.

## Claims

1. A method of driving a capacitive display device (21) comprising a capacitive display layer interposed between a plurality of scanning electrodes (Y) and a plurality of data electrodes (X), said scanning electrodes (Y) and said data electrodes (X) being arranged in mutually intersecting directions, said method comprising:
sequentially applying writing pulses (Vw) having a rectangular waveform to said scanning electrodes (Y); and
applying data pulses (Vm), which are pulse width modulated in accordance with gradation display data (D) to said data electrodes (X);
said data pulses (Vm) and said writing pulses (Vw) being such that their combined respective voltage magnitudes are greater than a minimum voltage necessary for emitting light from said display device (21), characterised in that said data pulses (Vm) have a voltage magnitude (V_{R}) which increases continuously during the period of each of said data pulses (Vm).

2. Apparatus for driving a capacitive display device (21) comprising:
a capacitive display layer interposed between a plurality of scanning electrodes (Y) and a plurality of data electrodes (X), said scanning electrodes (Y) and said data electrodes (X) being arranged in mutually intersecting directions;
scanning electrode driving means (24) for sequentially applying writing pulses (Vw) having a rectangular waveform to said scanning electrodes; and
data electrode driving means (26) for applying data pulses pulse width modulated in accordance with gradation display data to said data electrodes (X) in order that a potential difference between said scanning electrodes (Y) and said data electrodes (X) activates said capacitive display layer, characterised by means for causing said data pulses (Vm) to have a voltage magnitude (V_{R}) which increases continuously during the period of each of said data pulses (Vm).

3. Apparatus according to claim 2, wherein said data electrode driving means is arranged to derive said data pulses from a D.C. power supply (34), and includes an impedance converting means (40) disposed electrically in series between said D.C. power supply (34) and one of said data electrodes and having an impedance which varies in accordance with a control signal applied thereto; and
a control signal generating means (38,39) for generating a said control signal (A) which increases continuously in voltage level and applying said control signal to said impedance converting means (40); and
switching means (41) being provided for causing a current to be applied from said impedance converting means to said data electrode under the control of said control signal for a time period according to the gradation display data.

4. Apparatus according to claim 3, wherein the impedance converting means (40) and/or the switching means (41) comprise N-channel MOS transistors.

5. Apparatus according to claim 3 or claim 4, wherein the impedance of said impedance converting means (40) decreases for an increase in the voltage amplitude of said control signal.

## Patentansprüche

1. Verfahren zum Ansteuern einer kapazitiven Anzeigevorrichtung (21) mit einer kapazitiven Anzeigeschicht, die zwischen eine Vielzahl von Abrasterelektroden (Y) und eine Vielzahl von Datenelektroden (X) eingebettet ist, wobei diese Abrasterelektroden (Y) und diese Datenelektroden (X) in einander schneidenden Richtungen angeordnet sind, mit folgenden Schritten:
- aufeinanderfolgendes Anlegen von Schreibimpulsen (Vw) mit Rechtecksignalverlauf an die Abrasterelektroden (Y) und
- Anlegen von Datenimpulsen (Vm), die entsprechend Graustufen-Anzeigedaten (D) impulsbreitenmoduliert werden, an die Datenelektroden (X);
- wobei die Datenimpulse (Vm) und die Schreibimpulse (Vw) dergestalt sind, dass ihre kombinierten jeweiligen Spannungsamplituden größer als eine Minimalspannung sind, die dazu erforderlich ist, dass Licht von der Anzeigevorrichtung (21) emittiert wird;
**dadurch gekennzeichnet,** dass die Datenimpulse (Vm) eine Spannungsamplitude (Vr) aufweisen, die während der Periode jedes der Datenimpulse (Vm) kontinuierlich ansteigt.

2. Vorrichtung zum Ansteuern einer kapazitiven Anzeigevorrichtung (21) mit:
- einer kapazitiven Anzeigeschicht, die zwischen eine Vielzahl von Abrasterelektroden (Y) und eine Vielzahl von Datenelektroden (X) eingebettet ist, wobei diese Abrasterelektroden (Y) und diese Datenelektroden (X) in einander schneidenden Richtungen angeordnet sind;
- einer Abrasterelektroden-Treibereinrichtung (24) zum aufeinanderfolgenden Anlegen von Schreibimpulsen (Vw) mit Rechtecksignalverlauf an die Abrasterelektroden; und
- einer Datenelektroden-Treibereinrichtung (26) zum Anlegen von Datenimpulsen, die entsprechend Graustufen-Anzeigedaten impulsbreitenmoduliert sind, an die Datenelektroden (X), damit die Potentialdifferenz zwischen den Abrasterelektroden (Y) und den Datenelektroden (X) die kapazitive Anzeigeschicht aktiviert;
**gekennzeichnet durch** eine Einrichtung, die dafür sorgt, dass die Datenimpulse (Vm) eine Spannungsamplitude (V_{R}) aufweisen, die während der Periode jedes der Datenimpulse (Vm) kontinuierlich ansteigt.

3. Vorrichtung nach Anspruch 2, bei der
- die Datenelektroden-Treibereinrichtung so ausgebildet ist, dass sie die Datenimpulse von einer Gleichspannungsversorgung (34) herleitet, und sie eine Impedanzumsetzeinrichtung (40) aufweist, die elektrisch in Reihe zwischen diese Gleichspannungsversorgung (34) und eine der Datenelektroden geschaltet ist, und eine Impedanz aufweist, die abhängig von einem an sie angelegten Steuersignal variiert; und
- eine Steuersignal-Erzeugungseinrichtung (38, 39) vorhanden ist, um das Steuersignal (A) zu erzeugen, dessen Spannungspegel kontinuierlich ansteigt, und zum Anlegen dieses Steuersignals an die Impedanzumsetzeinrichtung (40); und
- eine Schalteinrichtung (41) vorhanden ist, um dafür zu sorgen, dass ein Strom von der Impedanzumsetzeinrichtung unter Steuerung durch das Steuersignal für eine den Graustufen-Anzeigedaten entsprechende Zeitperiode an die Datenelektrode geliefert wird.

4. Vorrichtung nach Anspruch 3, bei der die Impedanzumsetzeinrichtung (40) und/oder die Schalteinrichtung (41) N-Kanal-MOS-Transistoren aufweisen.

5. Vorrichtung nach Anspruch 3 oder Anspruch 4, bei der die Impedanz der Impedanzumsetzeinrichtung (40) bei einem Anstieg der Spannungsamplitude des Steuersignals abnimmt.

## Revendications

1. Procédé de commande d'un dispositif d'affichage capacitif (21) comportant une couche d'affichage capacitive intercalée entre une pluralité d'électrodes de balayage (Y) et une pluralité d'électrodes de données (X), lesdites électrodes de balayage (Y) et lesdites électrodes de données (X) étant agencées dans des directions se coupant mutuellement, ledit procédé comportant:
l'application séquentielle d'impulsions d'écriture (Vw) de forme d'onde rectangulaire auxdites électrodes de balayage (Y); et
l'application d'impulsions de données (Vm), modulées en largeur en fonction de données d'affichage de gradation (D), auxdites électrodes de données (X);
lesdites impulsions de données (Vm) et lesdites impulsions d'écriture (Vw) étant telles que la somme de leurs amplitudes de tension respectives soit supérieure à une tension minimale nécessaire à l'émission de lumière par ledit dispositif d'affichage (21), caractérisé en ce que lesdites impulsions de données (Vm) ont une amplitude de tension (V_{R}) qui augmente de façon continue pendant la période de chacune desdites impulsions de données (Vm).

2. Appareil de commande d'un dispositif d'affichage capacitif (21) comportant:
une couche d'affichage capacitive intercalée entre une pluralité d'électrodes de balayage (Y) et une pluralité d'électrodes de données (X), lesdites électrodes de balayage (Y) et lesdites électrodes de données (X) étant agencées dans des directions se coupant mutuellement;
un moyen de commande d'électrodes de balayage (24) pour appliquer séquentiellement des impulsions d'écriture (Vw) de forme d'onde rectangulaire auxdites électrodes de balayage; et
un moyen de commande d'électrodes d'écriture (26) pour appliquer des impulsions de données, modulées en largeur en fonction de données d'affichage de gradation, auxdites électrodes de données (X) pour qu'une différence de potentiel entre lesdites électrodes de balayage (Y) et lesdites électrodes de données (X) active ladite couche d'affichage capacitive, caractérisé par un moyen destiné à faire en sorte que lesdites impulsions de données (Vm) aient une amplitude de tension (V_{R}) qui augmente de façon continue pendant la période de chacune desdites impulsions de données (Vm).

3. Appareil selon la revendication 2, dans lequel le moyen de commande d'électrodes de données est agencé pour extraire lesdites impulsions de données d'une alimentation en courant continu (34) et comprend un moyen de conversion d'impédance (40) se trouvant électriquement en série entre ladite alimentation en courant continu (34) et une desdites électrodes de données et ayant une impédance qui varie en fonction d'un signal de commande qui lui est appliqué; et
un moyen de génération de signal de commande (38, 39) pour générer ledit signal de commande (A) dont le niveau de tension augmente de façon continue et pour appliquer ledit signal de commande audit moyen de conversion d'impédance (40); et
un moyen de commutation (41) destiné à faire appliquer un courant par ledit moyen de conversion d'impédance à ladite électrode de données sous le contrôle dudit signal de commande pendant une durée déterminée en fonction des données d'affichage de gradation.

4. Appareil selon la revendication 3, dans lequel le moyen de conversion d'impédance (40) et / ou le moyen de commutation (41) comporte(nt) des transistors MOS à canal N.

5. Appareil selon la revendication 3 ou la revendication 4, dans lequel l'impédance dudit moyen de conversion d'impédance (40) diminue quand l'amplitude de la tension dudit signal de commande augmente.
